(19) Europäisches Patentamt
European Patent Office
Office européen des brevets

(11) Veröffentlichungsnummer: **0 238 795 A1**

(12) # EUROPÄISCHE PATENTANMELDUNG

(21) Anmeldenummer: **87100831.4**

(51) Int. Cl.[4]: **C08C 19/08**

(22) Anmeldetag: **22.01.87**

(30) Priorität: **01.03.86 DE 3606745**

(43) Veröffentlichungstag der Anmeldung: **30.09.87 Patentblatt 87/40**

(84) Benannte Vertragsstaaten: **BE DE FR GB IT**

(71) Anmelder: **HÜLS AKTIENGESELLSCHAFT**
**Patentabteilung / PB 15 - Postfach 13 20**
**D-4370 Marl 1(DE)**

(72) Erfinder: **Stützel, Bernhard, Dr.**
**Stargarder Strasse 32**
**D-4370 Marl(DE)**
Erfinder: **Smigerski, Hans-Jürgen, Dr.**
**Kolberger Strasse 11**
**D-4370 Marl(DE)**
Erfinder: **Müller, Michael, Dr.**
**Mecklenburger Strasse 117**
**D-4400 Münster(DE)**
Erfinder: **Stevermüer, Günter**
**Heyerhoffstrasse 57**
**D-4370 Marl(DE)**

(54) **Verfahren zum Molekulargewichtsabbau von Naturkautschuk in Latexform.**

(57) Verfahren zum Molekulargewichtsabbau von Naturkautschuk in Latexform mit Hilfe eines Oxidationsmittels, wobei man als Oxidationsmittel mit Inertgas verdünnten Sauerstoff und/oder eine die Peroxidgruppe enthaltende Verbindung verwendet.

EP 0 238 795 A1

# Verfahren zum Molekulargewichtsabbau von Naturkautschuk in Latexform

Naturkautschuk (NK) wird in der Regel in Form von Ballen oder sogenannten "smoked sheets" gehandelt. Eine direkte Verarbeitung ist in folge zu hoher Viskosität nicht möglich. Der Kautschuk muß daher mit hohem Energieaufwand auf speziellen Walzen mechanisch abgebaut (mastiziert) werden. Ursache für die hohe Viskosität des Naturkautschuks sind Anteile zu hohen Molekulargewichts in der Molmassenverteilung, die durch die Biosynthese vorgegeben sind und bereits im Naturkautschuklatex vorliegen.

Um den maschinell und energetisch aufwendigen Schritt des mechanischen Abbaus zu umgehen, wurden bereits Versuche unternommen, den erforderlichen Abbau chemisch im Latex vorzunehmen (GB-PS 749 955). Bei diesem Verfahren wird der Kautschuklatex bei 40 bis 60 °C und einem pH-Wert von 3 bis 4 unter Zusatz von Alkalichlorit und Formaldehyd abgebaut. Der wesentliche Nachteil dieses Verfahrens liegt darin, daß der Naturkautschuklatex nicht in seiner alkalischen Form eingesetzt werden kann. Der erforderliche pH-Wert von 3 bis 4 kann nicht ohne Zusatz koagulationsverhindernder Stabilisierungsmittel eingestellt werden. Dadurch wird das Endprodukt nicht nur durch die Abbaureagenzien und deren Reaktionsprodukte, sondern auch durch weitere Zusätze (Säuren, Stabilisatoren) verändert.

Aus Ind. Eng. Chem., Vol. 43 (1951), Seite 475 ff., ist bereits ein Verfahren zum Molekulargewichtsabbau von Naturkautschuk in Latexform bekannt, bei dem der Latex in seiner alkalischen Form eingesetzt werden kann. Als Abbaumittel dient vornehmlich reiner Sauerstoff. Es hat sich nun gezeigt, daß so abgebaute Naturkautschuklatices sich nicht, oder nur unter Einsatz relativ hoher Füllstoffmengen zur Herstellung von rieselfähigen, füllstoffhaltigen Naturkautschukpulvern eignen.

Aufgabe der vorliegenden Erfindung war es daher, ein Verfahren zum Molekulargewichtsabbau von Naturkautschuk in Latexform zu entwickeln, das es gestattet, vom alkalischen Latex auszugehen und das zu Pro dukten führt, die besonders zur Herstellung von füllstoffarmen, rieselfähigen und lagerstabilen Naturkautschukpulvern verwendet werden können.

Diese Aufgabe wurde überraschenderweise durch die in den Ansprüchen beschriebenen Maßnahmen gelöst. Überraschend deswegen, weil es nicht zu erwarten war, daß der Ersatz von reinem Sauerstoff durch ein Gemisch von Sauerstoff und Inertgas und/oder die Peroxidgruppe tragenden Verbindungen einen positiven Einfluß auf die Rieselfähigkeit des aus dem abgebauten Naturkautschuklatex hergestellten Kautschukpulvers hat.

Wesentliches Ausgangsprodukt für das erfindungsgemäße Verfahren ist der Naturkautschuklatex. Dieser kommt üblicherweise als aufkonzentrierter, gegen Verkeimung stabilisierter Naturkautschuklatex, sogenanntem "constant viscosity latex" (CV-Latex), mit einem Feststoffgehalt von ca. 60 Gewichtsprozent in den Handel. Zum Einsatz bei dem beanspruchten Verfahren wird er in der Regel mit Wasser auf einen Feststoffgehalt von 10 bis 40 Gewichtsprozent verdünnt. Hieraus ist zu ersehen, daß man ebenfalls den direkt in den Pflanzfeldern anfallenden Naturkautschuklatex, sogenannter "field latex", mit einem Feststoffgehalt von ca. 30 Gewichtsprozent einsetzen kann.

Als Abbaureagenz wird beim erfindungsgemäßen Verfahren in erster Linie mit Inertgas verdünnter Sauerstoff eingesetzt. Mögliche Inertgase sind z. B. die Edelgase und vorzugsweise Stickstoff ($N_2$).

Der Gehalt an Sauerstoff in der Mischung beträgt im allgemeinen 20 bis 60 Volumenprozent, vorzugsweise 25 bis 55 Volumenprozent. Mischungen aus Sauerstoff und Stickstoff sind innerhalb dieser Bereiche besonders bevorzugt. Dabei und beim Einsatz anderer Inertgase als Stickstoff sind Sauerstoffpartialdrucke von 0,2 bis 5 bar, vorzugsweise 0,25 bis 3 bar, zweckmäßig. Die im Verlauf der Abbaureaktion aufgenommene Menge an Sauerstoff ($O_2$) soll - je nach dem angestrebten Ausmaß des Abbaus - im Bereichvon 2 bis 8 mMol, vorzugsweise 3 bis 5 mMol, pro 100 g Festkautschuk liegen.

Weitere Abbaureagenzien sind Verbindungen, welche die Peroxidgruppe -O-O-, tragen. Bevorzugt werden bei dem vorliegenden Verfahren Hydroperoxide eingesetzt. Typische Vertreter sind Wasserstoffperoxid, Cumolhydroperoxid und Pinanhydroperoxid, wobei Wasserstoffperoxid besonders bevorzugt ist.

Neben den Hydroperoxiden können auch organische Peroxide, wie sie als Starter für radikalische Polymerisationen bekannt sind, verwendet werden. Ihr Zerfall sollte innerhalb des Temperaturbereichs von 60 bis 100 °C stattfinden. Die Halbwertszeit sollte im Bereich von 20 bis 240 Minuten liegen. Typische Vertreter, die aus den Klassen Peroxocarbonate und der Peroxoester stammen, sind Dicyclohexylperoxodicarbonat, Dilauroylperoxid und Dibenzoylperoxid.

Die eine Peroxidgruppe tragenden Verbindungen werden - je nach dem angestrebten Ausmaß des Abbaus - in einer Menge von 1 bis 10 mMol, vorzugsweise 2 bis 5 mMol, pro 100 g Festkautschuk eingesetzt.

Selbstverständlich kann beim erfindungsgemäßen Verfahren auch eine Kombination aus beiden Arten der beschriebenen Abbaureagenzien eingesetzt werden. Die jeweiligen Mengen liegen innerhalb der angegebenen Bereiche. Die Gesamtmenge richtet sich wiederum nach dem angestrebten Ausmaß des Abbaus.

Das erfindungsgemäße Verfahren wird zweckmäßigerweise bei einer Temperatur von 60 bis 100 °C, vorzugsweise 70 bis 95 °C, durchgeführt. Temperaturen außerhalb des Bereichs von 60 bis 100 °C sind ebenfalls möglich, jedoch führen sie im Falle von Temperaturen < 60 °C zwangsläufig zu längeren Reaktionszeiten und im Falle von Temperaturen > 100°C zu einem höheren technischen Aufwand.

Das erfindungsgemäße Verfahren wird im allgemeinen wie folgt durchgeführt:

Man legt den Naturkautschuklatex mit einem Feststoffgehalt von 10 bis 40 Gewichtsprozent in einem geeigneten Behälter, vorzugsweise in einem Rührautoklaven, der mit einer Einrichtung zur Temperaturregelung, jeweils einer Zuleitung für gasförmige und flüssige Zugaben sowie entsprechender Meß-und Regeltechnik versehen ist, vor.

Beim Einsatz einer Sauerstoff-Inertgas-Mischung als Abbaureagenz wird der Kautschuklatex zunächst unter Inertgasatmosphäre aufgeheizt und nach Erreichen der gewünschten Temperatur mit Sauerstoff bis zum gewünschten Sauerstoff-Inertgas-Verhältnis beaufschlagt. Die Abbaureaktion läßt man solange laufen, bis die erforderliche Menge an Sauerstoff verbraucht ist. Diese richtet sich nach dem gewünschten Abbaugrad und kann durch gaschromatische Analyse des aufgegebenen Gasbettes oder durch Messung der Sauerstoffzugabe unter Konstanthaltung des Reaktordrucks gemessen werden. Aus der Sicht des Kautschukverarbeiters ist der gewünschte Abbaugraderreicht, wenn die Mooney-Viskosität einen Wert ML(1 + 4) von 45 bis 60 und die Defo-Härte einen Wert DH von 700 bis 1 000 erreicht hat. Diese Bereiche werden auch beim Einsatz von die Peroxidgruppe tragenden Verbindungen allein oder im Gemisch mit Sauerstoff-Inertgas-Mischungen durch geeignete Reaktionsführung erreicht. Die entsprechenden Ausgangswerte liegen beim Naturkautschuk bei ML(1 + 4) im Bereich von 90 bis 120, und bei DH im Bereich von 2500 bis 4 500.

Nach dem Erreichen des gewünschten Abbaugrades kann der Naturkautschuklatex verschiedenen Verwendungszwecken zugeführt werden. Einmal kann man den Kautschuk nach Verfahren des Standes der Technik fällen und zu Ballen verarbeiten.

Zum anderen kann die Fällung in Gegenwart von Füllstoffen, wie Ruß oder Kieselsäure, durchgeführt werden, so daß man sogenannte Masterbatches erhält. Ihre Herstellung auf diese Art und Weise ist bedeutend einfacher als die Einarbeitung von Füllstoffen in mastizierten Naturkautschuk.

Schließlich und bevorzugt werden die abgebauten Kautschuklatices zur Herstellung von füllstoffhaltigen, rieselfähigen und lagerstabilen Kautschukpulvern verwendet, z. B. nach dem Verfahren der DE-PS 28 22 148. Besonders vorteilhaft erfolgt die Herstellung füllstoffhaltiger Kautschukpulver nach einem noch nicht zum Stand der Technik gehörenden Verfahren (DE-OS .. .. ...). Dieses Verfahren ist dadurch gekennzeichnet, daß man dem Kautschuklatex vor der Vereinigung mit der Füllstoffsuspension 0,1 bis 15 Gewichtsteile - gerechnet auf 100 Gewichtsteile Kautschukfeststoff - eines hochmolekularen Amins mit quaternären Stickstoffunktionen und einem Molekulargewicht ( $\overline{M}w$) im Bereich von $10^4$ bis $10^8$ zusetzt.

Bei allen Verwendungszwecken kann man natürlich den nach dem erfindungsgemäßen Verfahren abgebauten Naturkautschuklatex verschneiden. Zum Verschnitt geeignet sind sowohl nach anderen Verfahren abgebaute Naturkautschuklatices als auch Synthesekautschuklatices, wie z. B. Kautschuklatices von Polymeren aus Styrol/Butadien, Butadien/Acrylnitril und Chloropren, und nicht abgebaute Naturkautschuklatices.

Das erfindungsgemäße Verfahren wird durch die nachfolgenden Beispiele näher erläutert.

Vorab sind in der Anmeldung benutzte Abkürzungen und Prüfungsverfahren zusammengestellt:

ML(1 + 4): Mooney-Viskosität, gemessen nach DIN 53 523.

DH: Defo-Härte, gemessen nach DIN 53 514

Jenike-Test zur Rieselfähigkeit: Der in N/m² angegebene Meßwert resultiert aus einem Schertest zur Bestimmung der Druckfestigkeit von Schüttgütern nach Jenike und Johannson im sog. Flowfactor Tester (Auswertung vgl. H.P. Kurz, Verfah-renstechnik <u>10</u>, S. 68 - 72 (1976)). Der Test wurde bei 20 °C und einer Verdichtungsspannung von etwa 1 000 N/m² durchgeführt. Pulver gelten bei Werten unterhalb 1 000 N/m² als gut riesel-und silierfähig. Im Bereich von 1 000 bis 2 000 N/m² sind die Pulver in ihrer Rieselfähigkeit noch befriedigend und im Silo mit Austragshilfen noch handhabbar. Bei Werten oberhalb 2000 N/m² geltendie Pulver als kohäsiv, d. h. Riesel-und Silierfähigkeitsind unbefriedigend.

V-Latex: Aufkonzentrierter Naturkautschuklatex mit ca. 60 % Festoff, der üblicherweise im Handel ist.Er wird aus dem direkt von den Pflanzfeldern kommenden Naturkautschuklatex (sog. "field latex") hergestellt.

VE-Wasser: Voll entsalztes (entmineralisiertes) Wasser
DCPDC:. Dicyclohexylperoxodicarbonat
LPO: Lauroylperoxid.

Beispiel 1

a) Abbau des Naturkautschuks in Latexform

Reaktionsgefäß war ein 2 l-V2A-Stahlautoklav mit Impellerrührer, regelbarem Rührgetriebe, Manometer und Temperaturregelung. Über Zuleitungen bestand die Möglichkeit, getrennt Inertgas und Sauerstoff aufzugeben. Außerdem enthielt der Autoklav eine Vorrichtung, welche die mengengeregelte Zudosierung von Sauerstoff erlaubte. Diese Vorrichtung arbeitet folgendermaßen: Ein elektronischer Druckaufnehmer auf dem Reaktionsgefäß erfaßte eine Druckabnahme, bewirkt durch den Verbrauch von Sauerstoff. Daraufhin wurde ein Ventil geöffnet und man ließ frischen Sauerstoff bis zum erneuten Erreichen des Solldrucks zuströmen. Von einem Durchflußmesser wurde diese Sauerstoffmenge jeweils registriert, so daß der Sauerstoffverbrauch verzögerungsfrei gemessen werden konnte.

In dem wie beschrieben ausgerüsteten Reaktionsgefäß wurden 600 g CV-Latex (60 Gewichtsprozent Feststoff) und 1 200 g VE-Wasser vorgelegt, so daß letztendlich ein Latex mit 20 Gewichtsprozent Feststoff vorlag.

Unter Inertgasatmophäre (1 bar Stickstoff) wurde der Inhalt des Autoklaven unter Rühren (300 Umdrehungen/min) auf 85 °C aufgeheizt. Danach wurde zusätzlich 1 bar Sauerstoff aufgegeben und die beschriebene Vorrichtung zur Messung des Sauerstoffverbrauchs zugeschaltet. Unter Aufrechterhaltung des Gesamtdruckes von 2 bar wurde verbrauchter Sauerstoff durch frisch zudosierten ersetzt. Nach einer Reaktionszeit von 180 Minuten waren 11,9 mMol Sauerstoff verbraucht, was 3,3 mMol pro 100 g Feststoff entspricht. Unmittelbar nach Aufnahme dieser Sauerstoffmenge wurde die sauerstoffhaltige Atmosphäre über der Flüssigkeit durch Stickstoff ersetzt und der Reaktionsansatz auf 25 °C abgekühlt.

b) Fällung des abgebauten Naturkautschuks

Der Naturkautschuklatex wurde sodann mit verdünnter Schwefelsäure ausgefällt. Hierzu wurden 7,5 g konzentrierte Schwefelsäure in 4 l Wasser bei 40 °C vorgelegt. Unter Rühren ließ man den nach a) erhaltenen Naturkautschuklatex langsam zulaufen (ca. 0,9 l in 15 Minuten). Der flockige Niederschlag wurde abfiltriert, zweimal mit VE-Wasser gewaschen und dann im Vakuumtrockenschrank bei 20 Torr und 30 °C 48 Stunden (h) lang getrocknet. Sodann wurden die Mooney-Viskosität und die Defo-Härte bestimmt. Die Werte betrugen: ML(1 + 4) = 50, DH = 850. Für den nach dem gleichen Fällverfahren erhaltenen nicht abgebauten Naturkautschuk betrugen die entsprechenden Werte: ML(1 + 4) = 105 und DH = 3 650.

c) Herstellung eines füllstoffhaltigen Naturkautschukpulvers

Die Herstellung erfolgte nach einem noch nicht zum Stand der Technik gehörenden Verfahren, bei welchem dem Kautschuklatex vor der Vereinigung mit der Füllstoffsuspension ein ausgewähltes hochmolekulares Amin zugesetzt wird.

1 800 g eines nach a) abgebauten Naturkautschuklatex wurden in einem 5 l-Autoklaven bei 80 °C und unter Rühren (300 Umdrehungen/min) mit 360 g einer einprozentigen Lösung eines handelsüblichen Polyamins, das im wesentlichen aus der Wiederholungseinheit

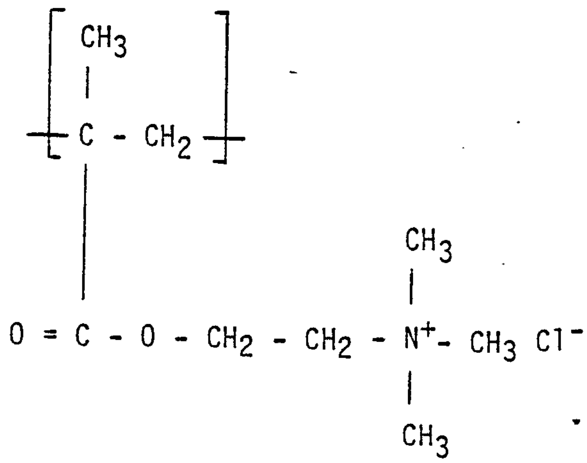

besteht und eine gewichtsmittlere Molmasse von $10^6$ aufweist, zusammengegeben. Auf 100 Gewichtsteile Kautschuk entfällt somit 1 Gewichtsteil Polyamin.
Nach kurzer Verweilzeit (< 10 sec) wurden - wiederum unter Rühren - 3 000 g einer wäßrigen Rußdispersion (6 Gewichtsprozent HAF-Ruß des Typs N 339) zugegeben. Sodann wurde die Suspension von rußgefüllten Kautschukteilchen auf eine Nutsche gegeben. Der Filterkuchen wurde zweimal mit VE-Wasser gewaschen und anschließend unter ständiger Bewegung mit einem warmen Luftstrom (ca. 60 °C) getrocknet. Der Jenike-Test ergab einen Wert von 870 N/m² (s. auch Tabelle).

Beispiel 2

Es wurde die im Beispiel 1 beschriebene Apparatur verwendet, wobei anstelle der registrierenden Sauerstoffzufuhr eine Druckbürette zum Zulauf flüssiger Reagenzien installiert war.
In dem Autoklaven wurden 600 g CV-Latex und 1 130 g VE-Wasser vorgelegt. In die Druckbürette wurden 70 g einer 3 gewichtsprozentigen wäßrigen Lösung von Wasserstoffperoxid gegeben. Der Inhalt des Autoklaven wurde unter Inertgas ($N_2$) auf 95 °C aufgeheizt, dann der Inhalt der Druckbürette zugegeben.
Nach 45 Minuten Reaktionszeit wurde der Ansatz auf 25 °C abgekühlt und analog Beispiel 1 einmal gemäß b) der Kautschuk gefällt, zum anderen gemäß c) der Latex zu einem füllstoffhaltigen Naturkautschukpulver weiterverarbeitet. Die Werte für die Mooney-Viskosität, die Defo-Härte und den Jenike-Test sind der Tabelle zu entnehmen.

Beispiel 3 bis 15 und Vergleichsbeispiele A bis C

Die Versuche wurden bis zum füllstoffhaltigen Naturkautschukpulver gemäß den Beispielen 1 und 2 unter den in der Tabelle angegebenen speziellen Bedingungen durchgeführt. Die jeweiligen Werte für die Mooney-Viskosität, die Defo-Härte und den Jenike-Test sind ebenfalls in der Tabelle enthalten.

Tabelle

| Beispiel bzw. Vergl. Beisp. | D | E | F | G | H | I | K | L | M | N | O | P |
|---|---|---|---|---|---|---|---|---|---|---|---|---|
| A | 20 | 85 | 100 | - | - | - | 2 | 30 | 3,4 | 52 | 860 | 2400 |
| B | 30 | 85 | 100 | - | - | - | 2 | 36 | 3,3 | 55 | 850 | 2600 |
| C | 20 | 80 | 100 | - | - | - | 1 | 60 | 3,3 | 50 | 800 | 2200 |
| 1 | 20 | 85 | 50 | $N_2$ | - | - | 1 | 180 | 3,3 | 50 | 850 | 870 |
| 2 | 20 | 95 | 0 | $N_2$ | $H_2O_2$ | 0,6 | - | 45 | - | 58 | 950 | 930 |
| 3 | 20 | 90 | 50 | $N_2$ | - | - | 1 | 126 | 3,3 | 48 | 790 | 840 |
| 4 | 30 | 90 | 50 | $N_2$ | - | - | 1 | 140 | 3,4 | 53 | 900 | 860 |
| 5 | 20 | 90 | 33 | $N_2$ | - | - | 0,5 | 180 | 3,5 | 49 | 875 | 890 |
| 6 | 20 | 90 | 25 | $N_2$ | - | - | 0,33 | 235 | 3,3 | 54 | 900 | 920 |
| 7 | 30 | 85 | 33 | $N_2$ | - | - | 0,5 | 230 | 3,3 | 52 | 880 | 910 |
| 8 | 20 | 80 | 50 | $N_2$ | - | - | 1 | 190 | 3,5 | 56 | 960 | 830 |
| 9 | 20 | 95 | 50 | $N_2$ | - | - | 1 | 90 | 3,3 | 53 | 890 | 930 |
| 10 | 35 | 70 | 50 | $N_2$ | - | - | 1 | 720 | 3,5 | 47 | 880 | 880 |
| 11 | 20 | 95 | 0 | $N_2$ | LPO | 1 | - | 85 | - | 56 | 950 | 900 |
| 12 | 20 | 80 | 0 | $N_2$ | DCPDC | 1 | - | 150 | - | 57 | 925 | 890 |
| 13 | 20 | 85 | 50 | Helium | - | - | 1 | 185 | 3,3 | 55 | 860 | 880 |
| 14 | 20 | 95 | 20 | $N_2$ | $H_2O_2$ | 0,2 | 0,6 | 45 | 1,6 | 51 | 790 | 900 |
| 15 | 20 | 95 | 20 | $N_2$ | DCPDC | 0,8 | 0,6 | 55 | 1,6 | 54 | 850 | 910 |

Die Buchstaben der Spalten D bis P haben folgende Bedeutung:

D = Kautschuk-Feststoff im Reaktor in Gewichtsprozent
E = Temperatur in °C
F = Volumenprozent Sauerstoff im Gasraum
G = Art des Inertgases

H = Peroxidisches Abbaureagenz
I = Gewichtsteile an peroxidischem Abbaureagenz bezogen auf 100 Gewichtsteile Kautschuk
K = Sauerstoff-Partialdruck in bar
L = Reaktionszeit in Minuten
M = Aufgenommene Sauerstoffmenge in mMol $O_2$ pro 100 g Kautschuk
N = Mooney-Viskosität ML(1 + 4)
O = Defo-Härte DH
P = Jenike-Schertest in $N/m^2$

## Ansprüche

1. Verfahren zum Molekulargewichtsabbau von Naturkautschuk in Latex-form mit Hilfe eines Oxidationsmittels,
dadurch gekennzeichnet,
daß man als Oxidationsmittel mit Inertgas verdünnten Sauerstoff und/oder eine die Peroxidgruppe enthaltende Verbindung einsetzt.

2. Verfahren nach Anspruch 1,
dadurch gekennzeichnet,
daß man als Oxidationsmittel ein Sauerstoff-Stickstoff-Gemisch mit 20 bis 60 Volumenprozent Sauerstoff einsetzt.

3. Verfahren nach den Ansprüchen 1 und 2,
dadurch gekennzeichnet,
daß man als die Peroxidgruppe enthaltende Verbindung Wasserstoff-peroxid einsetzt.

4. Verfahren nach den Ansprüchen 1 bis 3,
dadurch gekennzeichnet,
daß man den Abbau bei einer Temperatur von 60 bis 100 °C durch-führt.

5. Verfahren nach Anspruch 4,
dadurch gekennzeichnet,
daß man den Abbau bei einer Temperatur von 70 bis 95 °C durchführt.

6. Verfahren nach den Ansprüchen 1 bis 5,
dadurch gekennzeichnet,
daß man beim Einsatz eines Sauerstoff-Stickstoff-Gemisches als Oxidationsmittel den Abbau bei einem Sauerstoffpartialdruck von 0,2 bis 5 bar durchführt.

7. Verwendung der nach den Ansprüchen 1 bis 6 hergestellten Verfahrensprodukte zur Herstellung von füllstoffhaltigen, riesel-fähigen und lagerstabilen Naturkautschukpulvern.

Europäisches Patentamt

# EUROPÄISCHER RECHERCHENBERICHT

Nummer der Anmeldung

EP 87 10 0831

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | INDUSTRIAL AND ENGINEERING CHEMISTRY, Band 43, Februar 1951, Seiten 475-479, Amer. Chem. Soc., Washington, D.C., US; J. McGAVACK et al.: "Absorption of oxygen by ammonia-preserved rubber latex" * Page 478, Tabelle V * |  | C 08 C 19/08 |
|  | --- |  |  |
| A | GB-A- 616 174 (SOC. MERIDIONALE DU CAOUTCHOUC SOMECA) * Anspruch 1; Seite 4, Zeilen 28-32 * |  |  |
|  | ----- |  |  |

RECHERCHIERTE SACHGEBIETE (Int. Cl.4)

C 08 C

Der vorliegende Recherchenbericht wurde für alle Patentansprüche erstellt.

| Recherchenort | Abschlußdatum der Recherche | Prufer |
|---|---|---|
| DEN HAAG | 01-07-1987 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82